(19) **Europäisches Patentamt / European Patent Office / Office européen des brevets**

(11) **EP 4 647 193 A1**

(12) **EUROPEAN PATENT APPLICATION**
published in accordance with Art. 153(4) EPC

(43) Date of publication:
**12.11.2025 Bulletin 2025/46**

(21) Application number: **23925208.3**

(22) Date of filing: **28.02.2023**

(51) International Patent Classification (IPC):
**B22F 12/90** (2021.01)  **B22F 10/20** (2021.01)
**B22F 10/30** (2021.01)  **B22F 10/368** (2021.01)
**B29C 64/393** (2017.01)  **B33Y 50/02** (2015.01)

(52) Cooperative Patent Classification (CPC):
**B22F 10/20; B22F 10/30; B22F 10/368;
B22F 12/90; B29C 64/393; B33Y 50/02**

(86) International application number:
**PCT/JP2023/007240**

(87) International publication number:
**WO 2024/180651 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: JEOL Ltd.
**Akishima-shi, Tokyo 196-8558 (JP)**

(72) Inventors:
• **KITAMURA Shinichi**
  **Akishima-shi, Tokyo 196-8558 (JP)**
• **TSUTAGAWA Nari**
  **Akishima-shi, Tokyo 196-8558 (JP)**
• **HISAKI Taku**
  **Akishima-shi, Tokyo 196-8558 (JP)**

(74) Representative: **Boult Wade Tennant LLP**
**Salisbury Square House
8 Salisbury Square
London EC4Y 8AP (GB)**

(54) **THREE-DIMENSIONAL ADDITIVE MANUFACTURING DEVICE, FABRICATED SURFACE MONITORING METHOD, AND INFORMATION PROCESSING PROGRAM**

(57)    This invention provides a three-dimensional additive manufacturing apparatus capable of easily grasping the molten state of a whole surface. A three-dimensional additive manufacturing apparatus that performs additive manufacturing using a forming beam in a vacuum includes a thermoelectron detector that detects an amount of thermoelectrons radiated from a surface irradiated with the forming beam, a storage unit that stores an irradiation position on the surface irradiated with the forming beam and the amount of thermoelectrons detected by the thermoelectron detector at a timing of irradiation of the forming beam in association with each other, and a display controller that displays a thermoelectron distribution image obtained by superimposing an image representing the amount of thermoelectrons stored in the storage unit on an image of the surface.

FIG. 1

EP 4 647 193 A1

## Description

TECHNICAL FIELD

The present invention relates to a three-dimensional additive manufacturing apparatus, a surface monitoring method, and an information processing program.

BACKGROUND ART

In the above technical field, patent literature 1 discloses a technique in which an antideposition cover configured to prevent a metal vapor generated from a molten portion at the time of forming or a metal sputter caused by fireworks from being vapor-deposited on the inner wall of a vacuum container captures thermoelectrons emitted from the surface irradiated with a forming beam, and the thermoelectrons are detected as a current by a voltage superimposed current amplifier, thereby calculating a temperature of the surface.

CITATION LIST

PATENT LITERATURE

Patent literature 1: Japanese Patent Laid-Open No. 2022-050034

SUMMARY OF THE INVENTION

TECHNICAL PROBLEM

However, in the technique described in the above literature, it is impossible to easily grasp the molten state of the surface.

The present invention enables to provide a technique of solving the above-described problem.

SOLUTION TO PROBLEM

One example aspect of the present invention provides a three-dimensional additive manufacturing apparatus that performs additive manufacturing using a forming beam in a vacuum, comprising:

a thermoelectron detector that detects an amount of thermoelectrons radiated from a surface irradiated with the forming beam;
a storage unit that stores an irradiation position on the surface and the amount of thermoelectrons detected by the thermoelectron detector at a timing of irradiation of the forming beam in association with each other; and
a display controller that displays a thermoelectron distribution image obtained by superimposing an image representing the amount of thermoelectrons stored in the storage unit on an image of the surface.

Another example aspect of the present invention provides a surface monitoring method in three-dimensional additive manufacturing, comprising:

detecting an amount of thermoelectrons radiated from a surface irradiated with a forming beam that performs additive manufacturing;
storing, in a storage unit, an irradiation position on the surface and the amount of thermoelectrons detected at a timing of irradiation of the forming beam in association with each other; and
displaying a thermoelectron distribution image obtained by superimposing an image representing the amount of thermoelectrons stored in the storage unit on an image of the surface.

Still other example aspect of the present invention provides an information processing program for causing a computer to execute a method, comprising:

detecting an amount of thermoelectrons radiated from a surface irradiated with a forming beam that performs additive manufacturing;
storing, in a storage unit, an irradiation position on the surface and the amount of thermoelectrons detected at a timing of irradiation of the forming beam in association with each other; and

displaying a thermoelectron distribution image obtained by superimposing an image representing the amount of thermoelectrons stored in the storage unit on an image of the surface.

ADVANTAGEOUS EFFECTS OF INVENTION

According to the present invention, it is possible to easily grasp the molten state of a surface irradiated with a forming beam.

BRIEF DESCRIPTION OF DRAWINGS

Fig. 1 is a block diagram showing the configuration of a three-dimensional additive manufacturing apparatus according to the first example embodiment;
Fig. 2 is a block diagram showing the configuration of a three-dimensional additive manufacturing apparatus according to the second example embodiment;
Fig. 3 is a graph showing the relationship between a melting temperature and a thermoelectron amount at an irradiation position according to the second example embodiment;
Fig. 4A is a view showing the configuration of a thermoelectron amount storage table according to the second example embodiment;
Fig. 4B is a view showing the configuration of a thermoelectron amount display image table according to the second example embodiment;
Fig. 5 is a flowchart showing the processing procedure of the three-dimensional additive manufacturing apparatus according to the second example embodiment;
Fig. 6 is a view showing a display screen displayed by the three-dimensional additive manufacturing apparatus according to the second example embodiment;
Fig. 7 is a block diagram showing the configuration of a three-dimensional additive manufacturing apparatus according to the third example embodiment;
Fig. 8 is a view showing the configuration of a conversion table according to the third example embodiment;
Fig. 9 is a view showing the processing procedure and processing contents of a three-dimensional additive manufacturing apparatus according to the fourth example embodiment;
Fig. 10 is a block diagram showing the configuration of a three-dimensional additive manufacturing apparatus according to the fifth example embodiment; and
Fig. 11 is a block diagram showing the configuration of a three-dimensional additive manufacturing apparatus according to the sixth example embodiment.

DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise.

[First Example Embodiment]

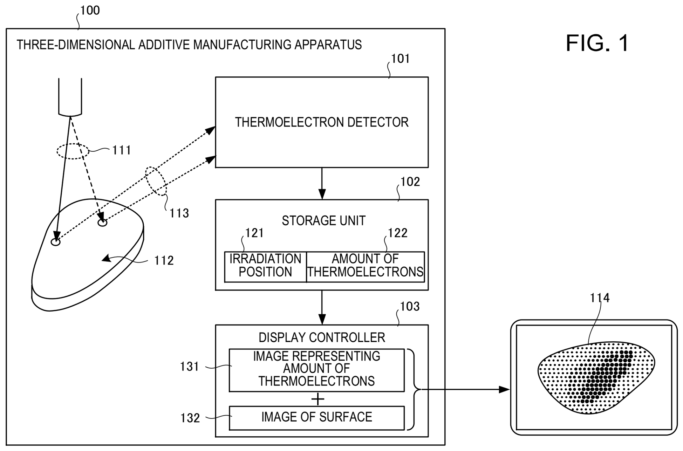

A three-dimensional additive manufacturing apparatus 100 according to the first example embodiment of the present invention will be described with reference to Fig. 1. The three-dimensional additive manufacturing apparatus 100 is an apparatus that performs additive manufacturing using a forming beam in a vacuum.

As shown in Fig. 1, the three-dimensional additive manufacturing apparatus 100 includes a thermoelectron detector 101, a storage unit 102, and a display controller 103. The thermoelectron detector 101 detects the amount of thermoelectrons 113 emitted from a surface 112 irradiated with a forming beam 111. The storage unit 102 stores an irradiation position 121 on the surface 112 and an amount 122 of thermoelectrons detected by the thermoelectron detector 101 at the irradiation timing of the forming beam 111 in association with each other. The display controller 103 displays a thermoelectron distribution image 114 obtained by superimposing an image 131 representing the thermoelectron amount stored in the storage unit 102 on an image 132 of the surface 112.

According to this example embodiment, the molten state of the surface can easily be grasped based on the thermoelectron distribution image obtained by superimposing the image representing the amount of thermoelectrons on the image of the surface. Note that in Fig. 1, the amount of thermoelectrons is represented by the sizes of displayed dots. However, the present invention is not limited to this, and a heat map image with different display luminances, densities, or colors may be used.

[Second Example Embodiment]

A three-dimensional additive manufacturing apparatus 200 according to the second example embodiment of the present invention will be described next. The three-dimensional additive manufacturing apparatus 200 according to this example embodiment detects the amount of thermoelectrons emitted from a surface irradiated with a forming beam, stores the irradiation position on the surface and the amount of thermoelectrons detected at the irradiation timing of the forming beam in association with each other, and displays a thermoelectron distribution image obtained by superimposing an image representing the amount of thermoelectrons on the image of the surface. Here, the image representing the amount of thermoelectrons may be a heat map image. Note that the detection of thermoelectrons is performed by detecting a current output from a positively charged metal plate. The metal plate according to this example embodiment is supported on a forming table by an insulating member and arranged at a position close to the surface, and the connecting portion between the metal plate and the current detector is arranged at a position apart from the surface.

<Configuration and Operation of Three-Dimensional Additive Manufacturing Apparatus>

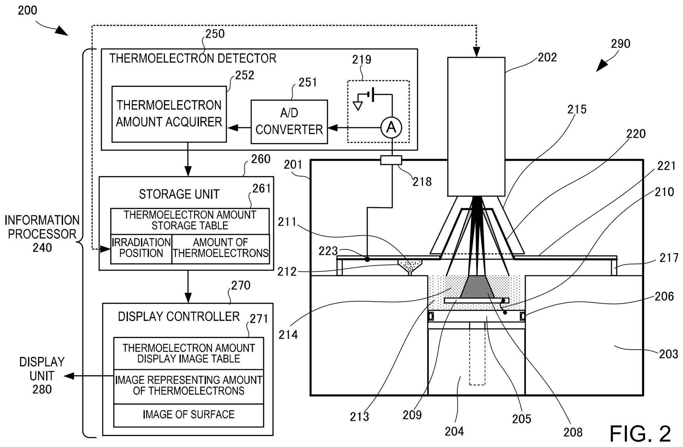

Fig. 2 is a block diagram showing the configuration of the three-dimensional additive manufacturing apparatus 200 according to this example embodiment. The three-dimensional additive manufacturing apparatus 200 includes an additive manufacturer 290 and an information processor 240.

(Configuration of Additive Manufacturer)

In the additive manufacturer 290 shown in Fig. 2, an electron gun 202 is attached to a vacuum container 201. In the vacuum container 201, a forming frame (forming box) 203 having a circular or rectangular cross section is provided. A Z-driving mechanism (a mechanism that changes rotation to movement in the vertical direction) 204 exists on the inner lower side of the forming frame 203, and a powder table 205 is driven in the Z direction by a rack and pinion mechanism or a ball screw. A heat-resistant flexible seal 206 is arranged in the gap between the forming frame 203 and the powder table 205 to ensure slidability and sealability on the sliding surface between the flexible seal 206 and the inner surface of the forming frame 203. The vacuum container 201 is exhausted by a vacuum pump (not shown), and the inside of the vacuum container 201 is maintained in a vacuum state.
A forming plate 209 on which a manufactured product 208 is formed in a state in which it is raised by powder (unsintered) 213 that is laid down is arranged on the powder table 205. The forming plate 209 is grounded, by a GND line 210, to the powder table 205 having the GND potential such that it does not electrically float. The manufactured product 208 is formed on the forming plate 209. At the time of forming of each layer, metal powder is laid up to the substantially same height as the upper surface of the forming frame 203 by a linear funnel 212 filled with metal powder 211. The powder is appropriately replenished from a powder hopper (not shown) to the linear funnel 212. On the powder (unsintered) 213 laid in correspondence with one layer, a region of the manufactured product 208 is two-dimensionally molten by an electron beam from the electron gun 202, and the layers are overlaid to build the manufactured product 208. A region of the powder (unsintered) 213 laid on the forming plate 209 other than the manufactured product 208 is powder (laid powder (temporarily sintered)) 214 temporarily sintered by the electron beam from the electron gun 202, and has conductivity.
An antideposition cover 215 grounded to GND is attached between the surface and the electron gun 202 to prevent a metal vapor generated at the time of forming or a metal sputter caused by fireworks from being vapor-deposited on the chamber inner wall. Also, this cover plays the role of a radiation shield from the surface at a high temperature.
In this example embodiment, thermoelectrons are detected using a thermoelectron detection electrode 220 dedicated to thermoelectron detection. Note that as for the metal of the thermoelectron detection electrode 220, a metal electrode of Ti or the like in which the secondary electron emission amount of electron excitation is small is used, and an insulating member configured to electrically insulate the electrode from the ground potential is arranged apart from the surface, thereby suppressing a decrease of the insulation resistance caused by temperature rise.
A thermoelectron detection electrode guide 221 having the thermoelectron detection electrode 220 attached via an insulating member 217 is attached to the two ends of the forming frame 203 whose temperature rises little during forming. A voltage superimposed current amplifier 219 is connected to the thermoelectron detection electrode guide 221 via a current introduction terminal 218 attached to the vacuum container 201. In the voltage superimposed current amplifier 219, there is little influence on a primary electron beam with respect to GND. In addition, a voltage as low as + several V is applied to attract only thermoelectrons having energy smaller than that of secondary electrons, thermoelectrons emitted from the molten point of the manufactured product 208 in the melting step are drawn into the thermoelectron detection electrode 220 by a positive potential gradient, and the amount of electrons is detected as a current. When a positive voltage is applied, the thermoelectron detection efficiency can be increased even in an electron beam OFF state or at the time of laser beam melting. Note that the amount of thermoelectrons to draw in is controlled by changing the positive applied voltage, and the applied voltage is changed between a case where the temperature is relatively low and a case where the temperature is high. For example, as for the positive applied voltage, the positive voltage is increased if the temperature is relatively low and decreased if the temperature is high. Thus, the current amplifier can be used in the whole temperature range without changing its gain.

Note that in the configuration shown in Fig. 2, the antideposition cover 215 hangs below the electron gun 202. However, a guide at the GND potential may be placed on the thermoelectron detection electrode guide 221 via an insulating member, and the antideposition cover 215 may be placed thereon. This is convenient because the thermoelectron detection electrode 220 and the antideposition cover 215 can be attached together on the surface.

(Configuration of Information Processor)

The information processor 240 show in Fig. 2 includes a thermoelectron detector 250, a storage unit 260, and a display controller 270. The thermoelectron detector 250, the storage unit 260, and the display controller 270 correspond to the thermoelectron detector 101, the storage unit 102, and the display controller 103 in Fig. 1, respectively.

The thermoelectron detector 250 includes the voltage superimposed current amplifier 219, an A/D converter 251, and a thermoelectron amount acquirer 252. As described in association with the additive manufacturer 290, the voltage superimposed current amplifier 219 is a circuit that converts the amount of thermoelectrons drawn into the thermoelectron detection electrode 220 into a current. The A/D converter 251 converts an analog current value that is the output of the voltage superimposed current amplifier 219 into a digital current value. The thermoelectron amount acquirer 252 acquires the digital current value corresponding to the thermoelectron amount and stores it in the storage unit 260 in association with the irradiation position.

The storage unit 260 includes a thermoelectron amount storage table 261, and the thermoelectron amount storage table 261 stores the amount of thermoelectrons in association with the irradiation position. The display controller 270 includes a thermoelectron amount display image table 271, and generates a display screen in which an image representing the amount of thermoelectrons and capable of identifying the amount of thermoelectrons stored in the thermoelectron amount storage table 261 of the storage unit 260 in association with the irradiation position and the image of the surface are superimposed such that the irradiation positions overlap. The generated thermoelectron amount display screen is transmitted to a display unit 280 and displayed.

(Operation)

The upper surface of the forming plate 209 covered with powder laid is arranged at the substantially same height as the upper surface of the forming frame 203, and a region slightly narrower than the whole region of the upper surface of the forming plate 209 is irradiated with the electron beam from the electron gun 202, thereby heating the forming plate 209 in advance to a temperature at which the metal powder 211 is temporarily sintered. At the start of forming, the powder table 205 is lowered by the Z-driving mechanism 204 such that the upper surface of the forming plate 209 is arranged at a position slightly lower than the upper surface of the forming frame 203. A slight descent height $\Delta Z$ corresponds to a layer thickness in the Z direction later. The linear funnel 212 filled with the metal powder 211 is moved to the opposite side along the upper surface of the forming plate 209, and the metal powder 211 corresponding to the height $\Delta Z$ is laid on the forming plate 209 and its periphery. Concerning the powder laid on the forming plate 209, a region slightly narrower than the forming plate 209 is irradiated with the electron beam from the electron gun 202 to heat the metal powder 211 laid on the forming plate 209, and the metal powder in the irradiation region is reliably temporarily sintered.

As the sequence of forming, "squeegeeing" for laying the powder, "powder heating (PH)" for heating the laid powder, "melting" of the manufactured product area, and "preheating (AH)" for preparing for next squeegeeing are executed in each layer, and these are repeated to perform forming. In the melting step, in accordance with a two-dimensional shape obtained by slicing a designed manufactured product prepared in advance at the interval $\Delta Z$, the two-dimensional shape region is molten by the electron beam from the electron gun 202. In the melting step, the electron beam is scanned in accordance with a preset scan path, and melting is performed point by point in accordance with a preset beam current, beam diameter, and scan speed (determined by the staying time at one point and the distance up to the next point). While melting is performed point by point, a thermoelectron signal from the voltage superimposed current amplifier 219 is detected and used as the luminance signal of the corresponding point of the two-dimensional shape of the manufactured product, thereby visualizing the intensity distribution of thermoelectrons.

Note that as for the three-dimensional additive manufacturing apparatus 200 shown in Fig. 2, a case where the additive manufacturer 290 and the information processor 240 are arranged close has been exemplified. However, the additive manufacturer 290 and the information processor 240 or a part of the information processor 240 may be arranged far apart and exchange information by wire or wirelessly.

<Reason Why Thermoelectron Amount at Melting Position Is Detected>

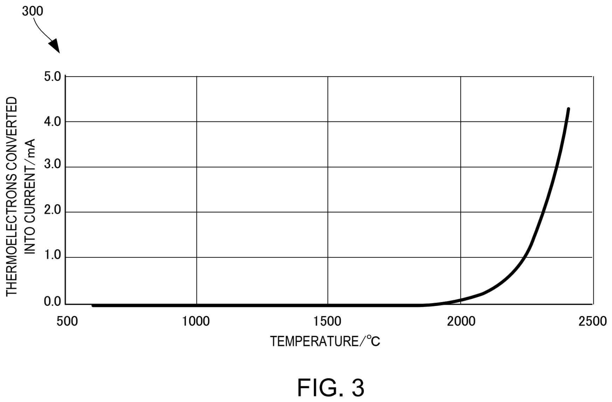

Fig. 3 is a graph showing the relationship between a melting temperature and a thermoelectron amount at an irradiation position according to this example embodiment. Fig. 3 shows the result of calculating thermoelectrons generated from a $\phi$0.5 mm region of Ti64 alloy as the function of temperature.

As is apparent from Fig. 3, the thermoelectron amount exponentially increases along with the rise of the temperature. For example, in a case of Ti64, in powder heating (PH) that is the step before melting, the surface is heated to about 750°C, and thermoelectrons emitted from the whole region correspond to about 0.5 pA (picoampere). On the other hand, thermoelectron emission from the $\phi$0.5 mm region at a melting point (about 1,650°C) is about 1 $\mu$A (microampere), it is about 100 $\mu$A (microampere) at a melting temperature of about 2,000°C, and thermoelectrons of 4 mA (milliampere) or more are generated at about 2,400°C.

On the other hand, if the surface has a size of 110 $\times$ 110 mm$^2$, thermoelectrons emitted when the surface is heated in powder heating (PH) or preheating (AH) correspond to a current as small as 20 nA (nanoampere) even if the temperature is 1,000°C. During melting, the temperature other than that of the molten point is lower. Hence, thermoelectrons detected during melting form a thermoelectron signal reflecting the high temperature of the molten point (molten pool). Since the amount of thermoelectrons in the molten state is extremely large, the thermoelectron image reflects the melting temperature distribution if it is assumed that the molten area substantially equals.

For example, the storage unit 260 stores the irradiation position, the irradiation amount and the integrated value of thermoelectrons detected by the thermoelectron detector 250 in association with each other. For example, the irradiation amount is represented as a current value for several ten $\mu$s (25 $\mu$s) which is readable at around 100 kHz. At the time of thermoelectron measurement at higher accuracy, to avoid the influence of electrons (primary electrons) from the electron gun 202 and secondary electrons generated from the powder by the electron beam, the electron beam from the electron gun 202 is preferably turned off. Alternatively, the electron beam from the electron gun 202 is converted into pulses, and Lock-in detection may be performed at that frequency. Also, in a case where the electron beam is converted into pulses, and Lock-in detection is performed, the electron beam need not be turned off at a predetermined time interval. If the irradiation current from the electron gun 202 is constant, conversion to the thermoelectron amount can be performed by processing the influence as the offset amount of the thermoelectron current even if the beam irradiation is kept.

(Thermoelectron Amount Storage Table)

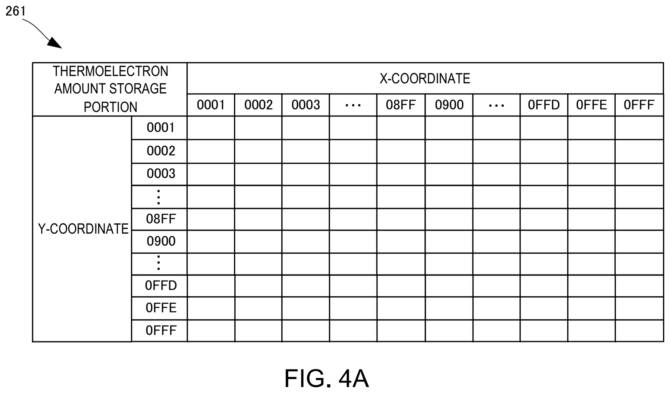

Fig. 4A is a view showing the configuration of the thermoelectron amount storage table 261 according to this example embodiment. The thermoelectron amount storage table 261 is used to store a thermoelectron amount in the storage unit 260 in association with an irradiation position.

The thermoelectron amount storage table 261 stores a thermoelectron amount in association with an X-coordinate in the X direction and a Y-coordinate in the Y direction, which indicate an irradiation position on the surface. Zero or a value that is not a thermoelectron amount is stored in association with the coordinates of a portion that is a portion outside the manufactured product (a portion not irradiated). In Fig. 4A, the coordinates are indicated by "0001" to "0FFF", but the present invention is not limited to this.

(Thermoelectron Amount Display Image Table)

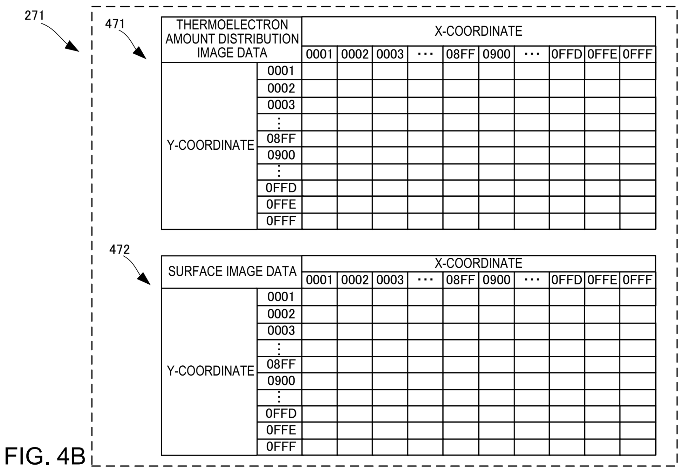

Fig. 4B is a view showing the configuration of the thermoelectron amount display image table 271 according to this example embodiment. The thermoelectron amount display image table 271 is used by the display controller 270 to generate a display screen in which a thermoelectron amount image is superimposed on a surface image.

The thermoelectron amount display image table 271 includes image data (thermoelectron amount distribution image data) 471 representing the amount of thermoelectrons and image data (surface image data) 472 of a surface. As the thermoelectron amount distribution image data 471, image data obtained by converting the thermoelectron amount stored in Fig. 4A into identifiable display is stored. Also, as the surface image data 472, image data capable of identifying a portion of the manufactured product and a portion that is not the manufactured product is stored. Note that as the surface image data 472, image data obtained by capturing the surface image may be used.

<Processing Procedure of Three-Dimensional Additive Manufacturing Apparatus>

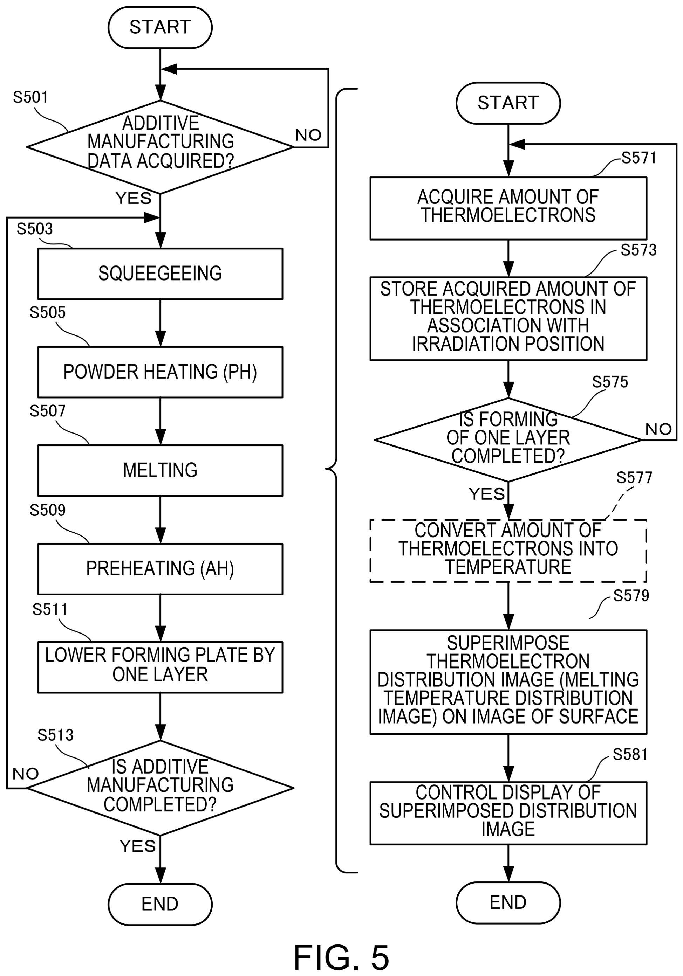

Fig. 5 is a flowchart showing the processing procedure of the three-dimensional additive manufacturing apparatus according to this example embodiment. This flowchart is executed by a CPU (Central Processing Unit) provided in the information processor 240 using a RAM (Random Access Memory), thereby implementing the constituent elements shown in Fig. 2 such that the three-dimensional additive manufacturing apparatus is caused to operate.

In step S501, the information processor 240 waits for acquisition of additive manufacturing data. If additive manufacturing data is acquired, in step S503, the information processor 240 instructs the additive manufacturer 290 to perform squeegeeing of additive manufacturing powder. In step S505, the information processor 240 instructs the additive manufacturer 290 to execute "powder heating (PH)" to heat the laid powder. In step S507, the information processor 240 instructs the additive manufacturer 290 to execute "melting" of a manufactured product area. In step S509, the information processor 240 instructs the additive manufacturer 290 to execute "preheating (AH)" to prepare for the next squeegeeing. In step S511, the information processor 240 instructs the additive manufacturer 290 to lower the forming plate by one layer. In step S513, the information processor 240 determines whether additive manufacturing is completed. If additive manufacturing is not completed, the process returns to step S503 to repeat forming of the next layer.

In "melting" of the manufactured product area in step S507, processing of steps S571 to S581 is performed as a surface monitoring method according to this example embodiment. In step S571, the information processor 240 acquires the amount of thermoelectrons. In step S573, the information processor 240 stores the acquired amount of thermoelectrons in the storage unit 260 in correspondence with the irradiation position. In step S575, the information processor 240 determines whether fused deposition modeling in the current is completed. If fused deposition modeling in the top layer is not completed, the information processor 240 returns to step S571 and acquires the amount of thermoelectrons corresponding to the next irradiation position.

If fused deposition modeling in the top layer is completed, in a case where the thermoelectron amount is converted into a melting temperature, in step S577, the information processor 240 converts the thermoelectron amount into the melting temperature. On the other hand, if fused deposition modeling in the top layer is completed, in a case where the thermoelectron amount is not converted into a melting temperature, the information processor 240 advances to step S579. In step S579, the information processor 240 superimposes a thermoelectron distribution image (melting temperature distribution image) on the image of the surface. In step S581, the information processor 240 controls to display the superimposed thermoelectron distribution image (melting temperature distribution image).

(Display Screen)

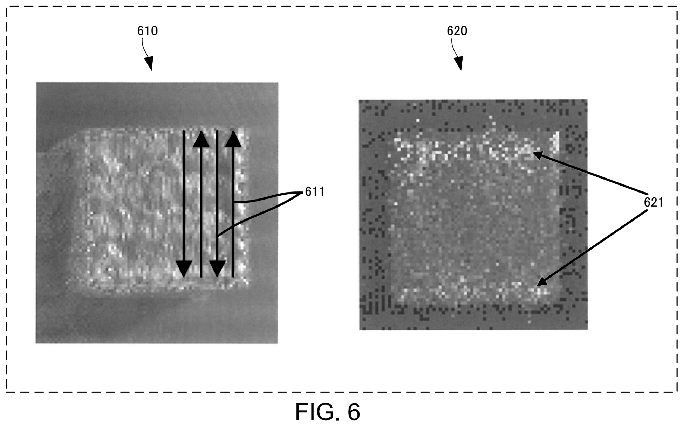

Fig. 6 is a view showing a display screen displayed by the three-dimensional additive manufacturing apparatus 200 according to this example embodiment. Fig. 6 shows a surface and a thermos-electron image obtained when the surface is molten.

Each arrow 611 shown on a surface 610 indicates the scan direction of a melting beam. Scan is performed reciprocally on the melting region. Hence, since the melting temperature is high on a folding back portion because of the influence of applied energy in the forward direction (on the forward path), a slight rise is formed on the surface.

As a thermoelectron image 620, an image including regions 621 which reflect this and in which the thermoelectron amount is large is obtained. This is because forming is performed using constant applied energy. If the applied energy is controlled such that the signal strength in the thermoelectron image 620 is constant, the rise can be avoided, and forming can be performed always with stable quality. The signal strength in the thermoelectron image suffices as the index of the melting temperature distribution.

Note that in Fig. 6, the amount of thermoelectrons is expressed by a different display luminance. However, the present invention is not limited to this, and a heat map image with different dot sizes, display densities, or colors may be used.

According to this example embodiment, it is possible to easily grasp the molten state of a whole surface based on a thermoelectron distribution image obtained by superimposing an image representing the amount of thermoelectrons on the image of a surface.

That is, by detecting thermoelectrons during melting, the melting temperature at each molten point on the melting region or an index thereof can be measured. In addition, it is not necessary to change the parameters of melting energy or the like and decide optimum melting conditions by viewing the molten surface shape during forming or internal defects or surface shape after forming, and a thermoelectron amount corresponding to the melting temperature can be measured. Thus, control can be performed such that a constant melting temperature can always be obtained independently of the size or location of a melting region in the melting step. It is also possible to always obtain a manufactured product with stable quality by optimizing the melting temperature.

[Third Example Embodiment]

A three-dimensional additive manufacturing apparatus according to the third example embodiment of the present invention will be described next. The three-dimensional additive manufacturing apparatus according to this example embodiment is different from the second example embodiment in that a melting temperature distribution image obtained by superimposing an image representing a melting temperature calculated based on not thermoelectrons but the amount of thermoelectrons on the image of a surface is displayed. Note that the image representing the melting temperature may be a heat map image. The rest of the components and operations is the same as in the second example embodiment. Hence, the same reference numerals denote the same components and operations, and a detailed description thereof will be omitted.

<Configuration and Operation of Three-Dimensional Additive Manufacturing Apparatus>

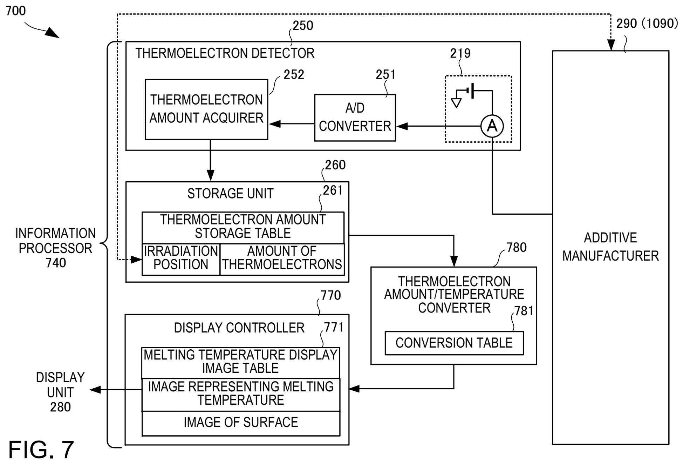

Fig. 7 is a block diagram showing the configuration of a three-dimensional additive manufacturing apparatus 700 according to this example embodiment. Note that the same reference numerals as in Fig. 2 denote the same constituent elements in Fig. 7, and a repetitive description thereof will be omitted.

In Fig. 7, a thermoelectron amount/temperature converter 780 and a display controller 770 are provided. The thermoelectron amount/temperature converter 780 includes a conversion table 781, and converts a value of thermoelectrons in a storage unit 260 into a melting temperature. The display controller 770 includes a melting temperature display image table 771, and generates an image representing a melting temperature, which can identify the melting temperature converted by the conversion table 781 of the thermoelectron amount/temperature converter 780 in association with the irradiation position. The display controller 770 then generates a melting temperature distribution display screen by superimposing the image representing the melting temperature on the image of the surface such that the irradiation positions overlap. The generated display screen is transmitted to a display unit 280 and displayed.

(Conversion Table)

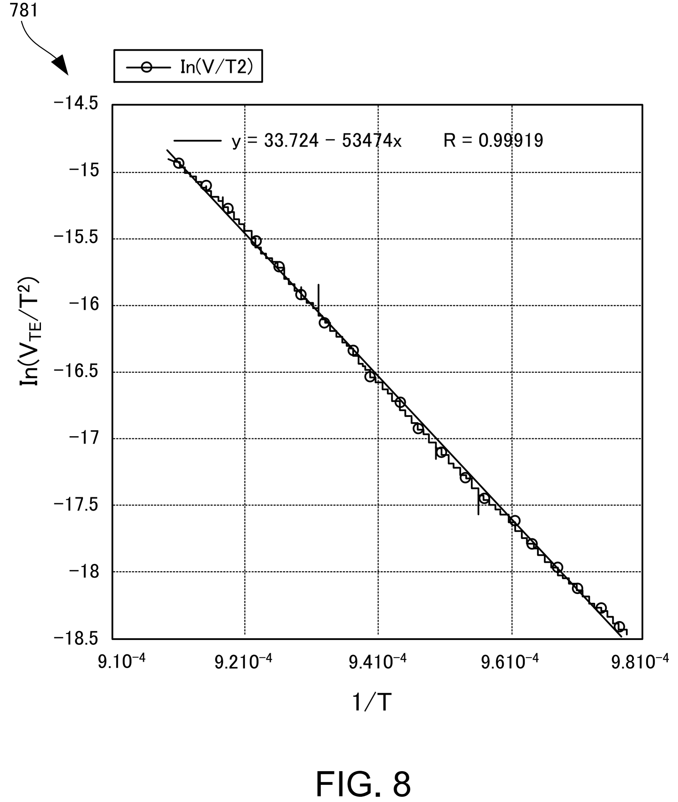

Fig. 8 is a view showing the configuration of the conversion table 781 according to this example embodiment. The conversion table 781 is used by the thermoelectron amount/temperature converter 780 to convert a thermoelectron amount into a melting temperature.

The conversion table 781 is generated in the following way. The relationship between a temperature T of a radiation thermometer or the like and a thermoelectron current I detected by a voltage superimposed current amplifier 219 is measured in advance, fitting of these is performed for equation (1) below, and a and b are obtained as constants.

$$I = a \cdot T^2 \cdot e^{b/T} \qquad\qquad (1)$$

Alternatively, in an equation developed like equation (2), the relationship between $\ln(I/T2)$ and $1/T$ may be plotted, and a and b may be obtained from the slope b and the intercept ln a of the linear expression. The linear expression at that time can be relatively easily obtained by the least squares method, or the like (see Fig. 8).

$$\ln (I/T^2) = b \cdot 1/T + \ln a \qquad\qquad (2)$$

The relationship between the thermoelectron current and the temperature is obtained using equation (1) for which a and b are obtained, and conversion to the temperature is performed.

Note that it is difficult to perform the above-described measurement because of the molten state. For this reason, a region that is large to some extent is scanned, the temperature of the region and thermoelectrons from the region are measured, the region is developed to a melting size such as a beam size, and the relationship between the temperature and thermoelectrons in a necessary spot region is obtained. Also, if the relationship between the temperature and the thermoelectrons is obtained, a melting step at a necessary melting temperature can be implemented by calculating a thermoelectron signal corresponding to a necessary temperature as a threshold in advance and using the value as a parameter.

According to this example embodiment, it is possible to easily grasp the molten state of a whole surface based on a thermoelectron distribution image obtained by superimposing an image representing the melting temperature on the image of a surface.

That is, by detecting the temperature during melting, the melting temperature at each molten point on the melting region or an index thereof can be measured. In addition, it is not necessary to change the parameters of melting energy or the like and decide optimum melting conditions by viewing the molten surface shape during forming or internal defects or surface shape after forming, and the melting temperature can be measured. Thus, control can be performed such that a constant melting temperature can always be obtained independently of the size or location of a melting region in the melting step. It is also possible to always obtain a manufactured product with stable quality by optimizing the melting temperature.

[Fourth Example Embodiment]

A three-dimensional additive manufacturing apparatus according to the fourth example embodiment of the present invention will be described next. The three-dimensional additive manufacturing apparatus according to this example embodiment is different from the second and third example embodiments in that a thermoelectron amount (melting temperature) is corrected in accordance with a state around an irradiation position, thereby obtaining a more correct thermoelectron amount (melting temperature). That is, the amount of thermoelectrons (melting temperature) is divided by the area of a region between an irradiation position irradiated with a forming beam and an adjacent irradiation position, thereby obtaining an amount of thermoelectrons (melting temperature) at the irradiation position irradiated with the forming beam. The rest of the components and operations is the same as in the second and third example embodiments. Hence, the same reference numerals denote the same components and operations, and a detailed description thereof will be omitted.

<Processing Procedure and Processing Contents of Three-Dimensional Additive Manufacturing Apparatus>

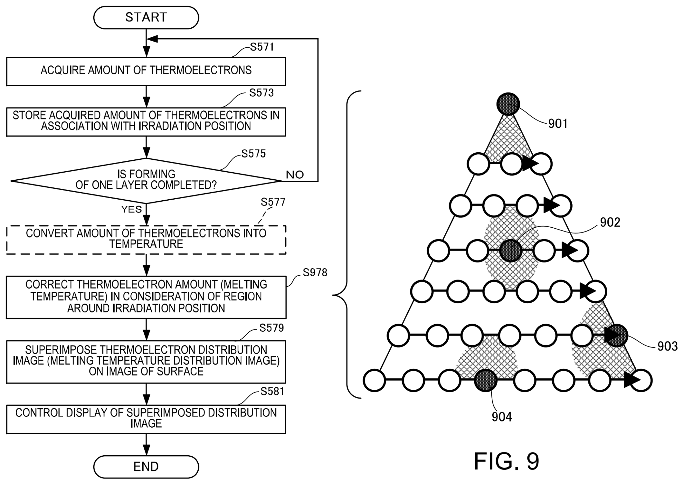

Fig. 9 is a view showing the processing procedure and processing contents of a three-dimensional additive manufacturing apparatus according to this example embodiment.

(Processing Procedure)

The processing procedure of the three-dimensional additive manufacturing apparatus will be described with reference to the left view (flowchart) of Fig. 9. Note that the same step numbers as in Fig. 5 denote the same steps in the flowchart of Fig. 9, and a repetitive description thereof will be omitted.

In step S978, an information processor 240 corrects a thermoelectron amount (melting temperature) in consideration of a region around an irradiation position.

(Processing Contents)

Correction according to this example embodiment will be described with reference to the right view of Fig. 9.

In a case where a melting temperature is estimated by detecting thermoelectrons at each molten point as in the above-described example embodiments, the fact that heat diffusion to the periphery of the molten point changes depending on the shape of the area to be melted or the position in that shape is not taken into consideration. In general, of a molten manufactured product (bulk portion) and a temporarily sintered portion around that, the bulk portion has a higher heat conductivity. Hence, when melting the inside of the surface, to obtain the same temperature, applied energy is increased because diffusion of heat is large, and the molten pool also becomes relatively large. On the other hand, since diffusion of heat is small at a vertex of a surface having a triangular shape, as shown in Fig. 9, the temperature rises more locally, and the molten pool also becomes relatively small.

In this example embodiment, to estimate more appropriate applied energy, the assumption that the molten pools at the molten points have the same size, as in the above-described example embodiments, is abandoned. A thermoelectron image is displayed using a thermoelectron signal amount per unit area in consideration of the arrangement of molten points decided in accordance with the shape of the area to be melted, thereby reflecting a temperature distribution according to the shape. By controlling applied energy at each molten point such that a constant temperature distribution is obtained, melting unevenness can be reduced, and defects can be suppressed.

For example, in a case of a surface having a triangular shape, as shown in Fig. 9, a scan path indicated by arrows is set in advance at the time of melting, and the position of each molten point is decided by the scan pitch (the interval of molten points in the scan direction) and the line pitch (the interval to the next scan line). A value obtained by dividing the strength of a thermoelectron signal during melting at each molten point by the area surrounded by peripheral molten points is visualized as the strength at the molten point.

At a vertex 901 of the surface having the triangular shape shown in Fig. 9, one molten point exists at the vertex. The next scan line is arranged at the interval of line pitch, and the interval between molten points on the line is decided by the scan pitch. If the scan line length is not a multiple of the scan pitch, a fraction is generated, and processing therefor changes depending on the apparatus. Here, processing changes depending on whether the scan line length is 1/2 or more or less than 1/2 of the scan pitch. If the scan line length is 1/2 or more of the scan pitch, the line pitch is short, and one molten point is arranged at an end of the line. On the other hand, if the scan line length is less than 1/2 of the scan pitch, the line pitch becomes long in consideration of the immediately preceding scan pitch, and one molten point is arranged at an end of the line. On the surface having the triangular shape shown in Fig. 9, the second line end (right end) from the top corresponds to the former case described above, and the sixth line end corresponds to the latter case.

When melting the vertex 901 of the surface having the triangular shape, the area of a triangle surrounded by the vertex and molten points around that point, that is, three points of the second line and indicated by hatching is the area surrounded by the molten points. When melting an internal point 902 of the surface having the triangular shape, an area surrounded by molten points around that point, that is, six peripheral points and indicated by hatching is the area surrounded by the molten points. When melting a scanning end point 903 of one line of the surface having the triangular shape, an area surrounded by molten points around that point, that is, four peripheral points and indicated by hatching is the area surrounded by the molten points. When melting a final scan line point 904 of the surface having the triangular shape, an area surrounded by molten points around that point, that is, four peripheral points and indicated by hatching is the area surrounded by the molten points. Similarly, for other molten points, an area surrounded by molten points is indicated by hatching. These areas are easily calculated by deciding the molten points based on the preset scan pitch and line pitch.

The amount of thermoelectrons (melting temperature) is divided by the area of the region between the irradiation position irradiated with the forming beam and the adjacent irradiation position, thereby obtaining the amount of thermoelectrons (melting temperature) at the irradiation position irradiated with the forming beam. If the molten point is apart from the peripheral points (in a region where the density of molten points is low), the temperature at the one point is increased. This can compensate for a melting shortage caused by the decrease of the density and consequently enables forming with little defects. If the molten points are densely arranged (in a region where the density of molten points is high), the temperature at the one point is decreased. This can compensate for excessive melting caused by the increase of the density and consequently enables quick forming with little defects.

According to this example embodiment, since a more correct amount of thermoelectrons (melting temperature) can be obtained, melting parameters (the irradiation intensity, the scan speed, the beam diameter, the film thickness, and the like) can accurately be adjusted.

[Fifth Example Embodiment]

A three-dimensional additive manufacturing apparatus according to the fifth example embodiment of the present invention will be described next. The three-dimensional additive manufacturing apparatus according to this example embodiment is different from the second to fourth example embodiments in that thermoelectrons are detected using a conductive member as an existing antideposition cover. A positively charged metal plate used to detect thermoelectrons in this example embodiment is provided inside the antideposition cover that prevents vapor radiated from a surface from being emitted. The rest of the components and operations is the same as in the second to fourth example embodiments. Hence, the same reference numerals denote the same components and operations, and a detailed description thereof will be omitted.

<Configuration and Operation of Three-Dimensional Additive Manufacturing Apparatus>

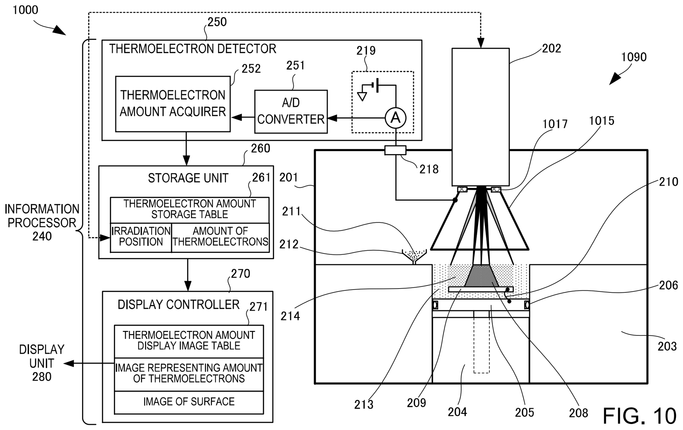

Fig. 10 is a block diagram showing the configuration of a three-dimensional additive manufacturing apparatus 1000 according to this example embodiment. Note that the same reference numerals as in Fig. 2 denote the same constituent elements in Fig. 10, and a repetitive description thereof will be omitted.

(Configuration of Additive Manufacturer)

The apparatus configuration in a case where an antideposition cover 1015 is used for thermoelectron detection is indicated by an additive manufacturer 1090 in Fig. 10. The antideposition cover 1015 is attached to the lower portion of an electron gun 202 via an insulating member 1017. Note that in Fig. 10, the antideposition cover 1015 is attached to the electron gun 202. However, the antideposition cover 1015 may be attached to the upper surface of a vacuum container 201, or an electrode for thermoelectron detection may be provided inside the grounded antideposition cover 1015. A voltage superimposed current amplifier 219 is connected to the antideposition cover 1015 via a current introduction terminal 218 attached to the vacuum container 201. In the voltage superimposed current amplifier 219, a voltage of + several V or less, which has little influence on a primary electron beam with respect to GND, is applied, thermoelectrons emitted from the molten point of a manufactured product 208 in the melting step are drawn into the antideposition cover 1015 by a positive potential gradient, and the amount of electrons is detected as a current.

(Configuration of Information Processor)

An information processor 240 according to this example embodiment is the same as in Fig. 2 except that the conductive member for thermoelectron detection is the antideposition cover 1015. Note that the information processor 240 may be the same as an information processor 740 shown in Fig. 7.

(Operation)

The operation of the three-dimensional additive manufacturing apparatus according to this example embodiment is the same as in the above-described example embodiments, and a repetitive description thereof will be omitted.

According to this example embodiment, it is possible to easily grasp the molten state of a whole surface based on a thermoelectron distribution image obtained by superimposing an image representing an amount of thermoelectrons on the image of a surface without newly providing a conductive member that draws in thermoelectrons, as in the second example embodiment.

[Sixth Example Embodiment]

A three-dimensional additive manufacturing apparatus according to the sixth example embodiment of the present invention will be described next. The three-dimensional additive manufacturing apparatus according to this example embodiment is different from the second to fifth example embodiments in that additive manufacturing parameters can automatically be adjusted by an information processor. The rest of the components and operations is the same as in the second to fifth example embodiments. Hence, the same reference numerals denote the same components and operations, and a detailed description thereof will be omitted.

<Three-Dimensional Additive Manufacturing Apparatus>

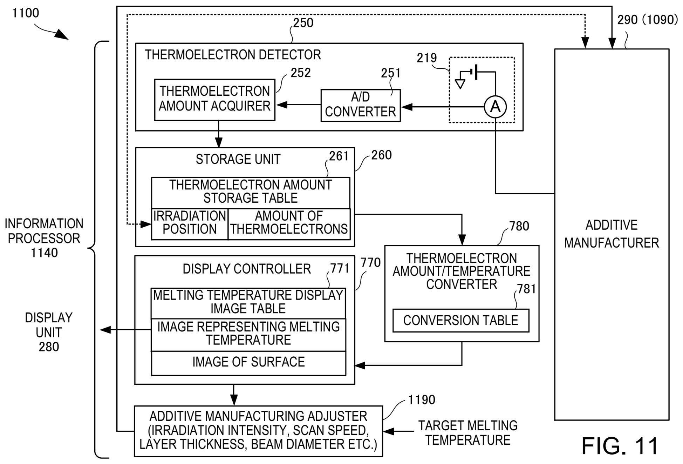

Fig. 11 is a block diagram showing the configuration of a three-dimensional additive manufacturing apparatus 1100 according to this example embodiment. Note that the same reference numerals as in Figs. 2, 7, and 10 denote the same constituent elements in Fig. 11, and a repetitive description thereof will be omitted.

An information processor 1140 shown in Fig. 11 includes an additive manufacturing adjuster 1190. The additive manufacturing adjuster 1190 adjusts the irradiation intensity, the scan speed, the layer thickness, the beam diameter, and the like such that the melting temperature shown in a melting temperature distribution image from a display controller 770 becomes a target melting temperature. Note that the additive manufacturing parameters to be adjusted are not limited to these.

According to this example embodiment, it is possible to implement, in real time, remelting in a case of a melting shortage for every forming of one layer or melting adjustment for the next layer. For example, a variation in the molten state is predicted from a built thermoelectron distribution image, and a remelting energy distribution at each point of a melting region is calculated in accordance with this, and remelting can be performed such that the melting region can have an even thermoelectron distribution. Such remelting can also be limited to only a local melting shortage region.

[Other Example Embodiments]

In the above-described example embodiments, electron beam type PBF has been described. Even in wire or powder type DED, melting temperature measurement by thermoelectrons can be performed during melting. Even in a laser type, thermoelectron measurement can similarly be performed in a vacuum, and melting temperature measurement during melting can be performed. In laser beam melting, thermoelectrons are detected even at the time of beam irradiation.

While the invention has been particularly shown and described with reference to example embodiments thereof, the invention is not limited to these example embodiments. It will be understood by those of ordinary skill in the art that various changes in form and details may be made therein without departing from the spirit and scope of the present invention as defined by the claims. A system or apparatus including any combination of the individual features included in the respective example embodiments may be incorporated in the scope of the present invention.

The present invention is applicable to a system including a plurality of devices or a single apparatus. The present invention is also applicable even when an information processing program for implementing the functions of example embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described example embodiments.

**Claims**

1. A three-dimensional additive manufacturing apparatus that performs additive manufacturing using a forming beam in a vacuum, comprising:

   a thermoelectron detector that detects an amount of thermoelectrons radiated from a surface irradiated with the forming beam;

a storage unit that stores an irradiation position on the surface irradiated with the forming beam and the amount of thermoelectrons detected by said thermoelectron detector at a timing of irradiation of the forming beam in association with each other; and

a display controller that displays a thermoelectron distribution image obtained by superimposing an image representing the amount of thermoelectrons stored in said storage unit on an image of the surface.

2. The three-dimensional additive manufacturing apparatus according to claim 1, wherein said display controller displays a temperature distribution image obtained by superimposing an image representing a melting temperature calculated based on the amount of thermoelectrons on the image of the surface.

3. The three-dimensional additive manufacturing apparatus according to claim 2, wherein the image representing the melting temperature is a heat map image.

4. The three-dimensional additive manufacturing apparatus according to claim 1, wherein
said thermoelectron detector comprises:

a positively charged metal plate; and
a current detector that detects a current output from the metal plate.

5. The three-dimensional additive manufacturing apparatus according to claim 4, wherein said metal plate is supported on a forming table by an insulating member and arranged at a position close to the surface, and a connecting portion between said metal plate and said current detector is arranged at a position apart from the surface.

6. The three-dimensional additive manufacturing apparatus according to claim 4, wherein said metal plate is provided inside an antideposition cover that prevents vapor radiated from the surface from being emitted.

7. The three-dimensional additive manufacturing apparatus according to claim 1, wherein said display controller divides the amount of thermoelectrons stored in said storage unit by an area of a region between the irradiation position irradiated with the forming beam and an adjacent irradiation position, thereby obtaining the amount of thermoelectrons at the irradiation position irradiated with the forming beam.

8. The three-dimensional additive manufacturing apparatus according to claim 1, wherein said storage unit stores the irradiation position irradiated with the forming beam and an integrated value of thermoelectrons detected by said thermoelectron detector during a predetermined time associated with an irradiation timing of the forming beam in association with each other.

9. A surface monitoring method in three-dimensional additive manufacturing, comprising:

detecting an amount of thermoelectrons radiated from a surface irradiated with a forming beam that performs additive manufacturing;
storing, in a storage unit, an irradiation position on the surface irradiated with the forming beam and the amount of thermoelectrons detected at a timing of irradiation of the forming beam in association with each other; and
displaying a thermoelectron distribution image obtained by superimposing an image representing the amount of thermoelectrons stored in the storage unit on an image of the surface.

10. An information processing program for causing a computer to execute a method, comprising:

detecting an amount of thermoelectrons radiated from a surface irradiated with a forming beam that performs additive manufacturing;
storing, in a storage unit, an irradiation position on the surface irradiated with the forming beam and the amount of thermoelectrons detected at a timing of irradiation of the forming beam in association with each other; and
displaying a thermoelectron distribution image obtained by superimposing an image representing the amount of thermoelectrons stored in the storage unit on an image of the surface.

FIG. 1

**100** THREE-DIMENSIONAL ADDITIVE MANUFACTURING APPARATUS

**101** THERMOELECTRON DETECTOR

111

113

112

**102** STORAGE UNIT

**121** IRRADIATION POSITION

**122** AMOUNT OF THERMOELECTRONS

**103** DISPLAY CONTROLLER

131 IMAGE REPRESENTING AMOUNT OF THERMOELECTRONS

+

132 IMAGE OF SURFACE

114

200

250

THERMOELECTRON DETECTOR

219

252

THERMOELECTRON AMOUNT ACQUIRER

251

A/D CONVERTER

A

INFORMATION PROCESSOR 240

260

201

STORAGE UNIT

261

THERMOELECTRON AMOUNT STORAGE TABLE

| IRRADIATION POSITION | AMOUNT OF THERMOELECTRONS |
|---|---|

270

DISPLAY CONTROLLER

271

THERMOELECTRON AMOUNT DISPLAY IMAGE TABLE

IMAGE REPRESENTING AMOUNT OF THERMOELECTRONS

IMAGE OF SURFACE

DISPLAY UNIT 280

202

290

215

220

221

210

217

206

203

218

211

223

212

214

213

209

204

205

208

FIG. 2

300

FIG. 3

261

| THERMOELECTRON AMOUNT STORAGE PORTION | | X-COORDINATE | | | | | | | | | |
|---|---|---|---|---|---|---|---|---|---|---|---|
| | | 0001 | 0002 | 0003 | · · · | 08FF | 0900 | · · · | 0FFD | 0FFE | 0FFF |
| Y-COORDINATE | 0001 | | | | | | | | | | |
| | 0002 | | | | | | | | | | |
| | 0003 | | | | | | | | | | |
| | ⋮ | | | | | | | | | | |
| | 08FF | | | | | | | | | | |
| | 0900 | | | | | | | | | | |
| | ⋮ | | | | | | | | | | |
| | 0FFD | | | | | | | | | | |
| | 0FFE | | | | | | | | | | |
| | 0FFF | | | | | | | | | | |

FIG. 4A

FIG. 4B

271

471

| THERMOELECTRON AMOUNT DISTRIBUTION IMAGE DATA | | X-COORDINATE | | | | | | | | | |
|---|---|---|---|---|---|---|---|---|---|---|---|
| | | 0001 | 0002 | 0003 | ⋯ | 08FF | 0900 | ⋯ | 0FFD | 0FFE | 0FFF |
| Y-COORDINATE | 0001 | | | | | | | | | | |
| | 0002 | | | | | | | | | | |
| | 0003 | | | | | | | | | | |
| | ⋮ | | | | | | | | | | |
| | 08FF | | | | | | | | | | |
| | 0900 | | | | | | | | | | |
| | ⋮ | | | | | | | | | | |
| | 0FFD | | | | | | | | | | |
| | 0FFE | | | | | | | | | | |
| | 0FFF | | | | | | | | | | |

472

| SURFACE IMAGE DATA | | X-COORDINATE | | | | | | | | | |
|---|---|---|---|---|---|---|---|---|---|---|---|
| | | 0001 | 0002 | 0003 | ⋯ | 08FF | 0900 | ⋯ | 0FFD | 0FFE | 0FFF |
| Y-COORDINATE | 0001 | | | | | | | | | | |
| | 0002 | | | | | | | | | | |
| | 0003 | | | | | | | | | | |
| | ⋮ | | | | | | | | | | |
| | 08FF | | | | | | | | | | |
| | 0900 | | | | | | | | | | |
| | ⋮ | | | | | | | | | | |
| | 0FFD | | | | | | | | | | |
| | 0FFE | | | | | | | | | | |
| | 0FFF | | | | | | | | | | |

START

S501 — ADDITIVE MANUFACTURING DATA ACQUIRED? → NO

YES

S503 — SQUEEGEEING

S505 — POWDER HEATING (PH)

S507 — MELTING

S509 — PREHEATING (AH)

S511 — LOWER FORMING PLATE BY ONE LAYER

S513 — IS ADDITIVE MANUFACTURING COMPLETED? → NO

YES

END

START

S571 — ACQUIRE AMOUNT OF THERMOELECTRONS

S573 — STORE ACQUIRED AMOUNT OF THERMOELECTRONS IN ASSOCIATION WITH IRRADIATION POSITION

S575 — IS FORMING OF ONE LAYER COMPLETED? → NO

YES

S577 — CONVERT AMOUNT OF THERMOELECTRONS INTO TEMPERATURE

S579 — SUPERIMPOSE THERMOELECTRON DISTRIBUTION IMAGE (MELTING TEMPERATURE DISTRIBUTION IMAGE) ON IMAGE OF SURFACE

S581 — CONTROL DISPLAY OF SUPERIMPOSED DISTRIBUTION IMAGE

END

FIG. 5

FIG. 6

700

250

290 (1090)

THERMOELECTRON DETECTOR

219

252

251

THERMOELECTRON
AMOUNT ACQUIRER

A/D
CONVERTER

A

INFORMATION
PROCESSOR
740

STORAGE UNIT

260

261

THERMOELECTRON AMOUNT
STORAGE TABLE

| IRRADIATION POSITION | AMOUNT OF THERMOELECTRONS |
|---|---|

780

THERMOELECTRON
AMOUNT/TEMPERATURE
CONVERTER

781

CONVERSION TABLE

ADDITIVE
MANUFACTURER

770

DISPLAY CONTROLLER

771

MELTING TEMPERATURE DISPLAY
IMAGE TABLE

DISPLAY
UNIT
280

IMAGE REPRESENTING MELTING
TEMPERATURE

IMAGE OF SURFACE

FIG. 7

FIG. 8

START

ACQUIRE AMOUNT OF THERMOELECTRONS — S571

STORE ACQUIRED AMOUNT OF THERMOELECTRONS IN ASSOCIATION WITH IRRADIATION POSITION — S573

IS FORMING OF ONE LAYER COMPLETED? — S575 — NO

YES

CONVERT AMOUNT OF THERMOELECTRONS INTO TEMPERATURE — S577

CORRECT THERMOELECTRON AMOUNT (MELTING TEMPERATURE) IN CONSIDERATION OF REGION AROUND IRRADIATION POSITION — S978

SUPERIMPOSE THERMOELECTRON DISTRIBUTION IMAGE (MELTING TEMPERATURE DISTRIBUTION IMAGE) ON IMAGE OF SURFACE — S579

CONTROL DISPLAY OF SUPERIMPOSED DISTRIBUTION IMAGE — S581

END

FIG. 9

FIG. 10

1100

250

THERMOELECTRON DETECTOR

252
THERMOELECTRON AMOUNT ACQUIRER

251
A/D CONVERTER

219

A

290 (1090)

STORAGE UNIT 261 260

THERMOELECTRON AMOUNT STORAGE TABLE

IRRADIATION POSITION | AMOUNT OF THERMOELECTRONS

INFORMATION PROCESSOR 1140

DISPLAY CONTROLLER 771 770

MELTING TEMPERATURE DISPLAY IMAGE TABLE

IMAGE REPRESENTING MELTING TEMPERATURE

IMAGE OF SURFACE

THERMOELECTRON AMOUNT/TEMPERATURE CONVERTER 780

CONVERSION TABLE 781

ADDITIVE MANUFACTURER

DISPLAY UNIT 280

ADDITIVE MANUFACTURING ADJUSTER (IRRADIATION INTENSITY, SCAN SPEED, LAYER THICKNESS, BEAM DIAMETER ETC.) 1190

TARGET MELTING TEMPERATURE

FIG. 11

24

## INTERNATIONAL SEARCH REPORT

| International application No. |
| --- |
| **PCT/JP2023/007240** |

| | |
| --- | --- |
| **A. CLASSIFICATION OF SUBJECT MATTER** | |

***B22F 12/90***(2021.01)i; ***B22F 10/20***(2021.01)i; ***B22F 10/30***(2021.01)i; ***B22F 10/368***(2021.01)i; ***B29C 64/393***(2017.01)i; ***B33Y 50/02***(2015.01)i
FI:  B22F12/90; B22F10/20; B22F10/30; B22F10/368; B29C64/393; B33Y50/02

According to International Patent Classification (IPC) or to both national classification and IPC

| **B. FIELDS SEARCHED** |
| --- |

Minimum documentation searched (classification system followed by classification symbols)
B22F12/90; B22F10/20; B22F10/30; B22F10/368; B29C64/393; B33Y50/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| **C. DOCUMENTS CONSIDERED TO BE RELEVANT** |
| --- |

| Category* | Citation of document, with indication, where appropriate, of the relevant passages | Relevant to claim No. |
| --- | --- | --- |
| A | JP 2022-050034 A (JEOL LTD.) 30 March 2022 (2022-03-30) entire text, all drawings | 1-10 |
| A | WO 2017/163430 A1 (TECHNOLOGY RESEARCH ASSOCIATION FOR FUTURE ADDITIVE MANUFACTURING) 28 September 2017 (2017-09-28) entire text, all drawings | 1-10 |
| A | JP 2019-007065 A (JEOL LTD.) 17 January 2019 (2019-01-17) entire text, all drawings | 1-10 |
| A | JP 2022-184906 A (NIKON CORPORATION) 13 December 2022 (2022-12-13) entire text, all drawings | 1-10 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 April 2023** | **25 April 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

| | | International application No. |
|---|---|---|
| | | **PCT/JP2023/007240** |

| Patent document cited in search report | | | Publication date (day/month/year) | Patent family member(s) | | | Publication date (day/month/year) |
|---|---|---|---|---|---|---|---|
| JP | 2022-050034 | A | 30 March 2022 | US 2022/0080506 A1 entire text, all drawings EP 3970885 A2 | | | |
| WO | 2017/163430 | A1 | 28 September 2017 | US 2018/0133840 A1 entire text, all drawings EP 3248762 A1 | | | |
| JP | 2019-007065 | A | 17 January 2019 | US 2019/0054701 A1 entire text, all drawings EP 3421158 A1 | | | |
| JP | 2022-184906 | A | 13 December 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022050034 A